# EUROPEAN PATENT SPECIFICATION

(11) **EP 3 751 636 B1**
(45) Date of publication and mention of the grant of the patent: **02.04.2025**
(21) Application number: 20164198.2
(22) Date of filing: 19.03.2020
(51) Int. Cl.: H01M 50/209, H01M 50/291, H01M 50/503, H01M 50/507, H01M 50/55, H01M 50/557

(54) **BATTERY MODULE AND BATTERY PACK**
BATTERIEMODUL UND BATTERIESATZ
MODULE DE BATTERIE ET BLOC BATTERIE

(30) Priority: 26.04.2019 CN 201920582840 U
(43) Date of publication of application: 16.12.2020
(73) Proprietor: Contemporary Amperex Technology (Hong Kong) Limited, Central, Central And Western District (HK)
(72) Inventor: Jin, Haizu, Fujian, 352100 (CN); You, Kaijie, Fujian, 352100 (CN); Hou, Yuepan, Fujian, 352100 (CN); Ma, Jun, Fujian, 352100 (CN); Lin, Weilong, Fujian, 352100 (CN); Chen, Xingdi, Fujian, 352100 (CN)
(74) Representative: Patrade A/S

(56) References cited:
- JP-A- 2017 050 164
- JP-A- 2017 139 099
- KR-A- 20150 128 175
- US-A1- 2003 003 350

## Description

### CROSS-REFERENCE TO RELATED APPLICATIONS

This disclosure claims priority to Chinese Patent Application No. 201920582840.1 filed April 26, 2019.

### FIELD OF THE INVENTION

The present disclosure relates to the field of batteries, and in particular relates to a battery module and a battery pack.

### DESCRIPTION OF RELATED ART

A battery module includes an upper baseplate, a lower baseplate, and a plurality of battery cells fit to each other in parallel. The battery cells are fixed between the upper baseplate and the lower baseplate.

JP2017139099A provides a battery module which can, when heating or expansion due to an abnormal state of a battery cell has occurred, suppress the expansion of the battery cell and can also more reliably prevent the heat transfer to an adjacent battery cell. A battery module 10 comprises a plurality of battery cells 20 arranged next to each other. The battery module 10 further comprises a spacer 50 which is sandwiched between the adjacent battery cells 20. The spacer 50 is arranged such that it is detached as the internal temperature of the battery cells 20 rises.

KR1020150128175A provides a spacer for a secondary battery and the secondary battery including the same, capable of promoting heat dissipation and providing an extra space for an expansion of a secondary battery cell by maintaining a proper interval between an adjacent secondary battery cell or between the secondary battery cell and a case. The disclosed spacer for the secondary battery comprises a rod portion which is linearly extended in one horizontal direction, and a pair of extension ends extended in a width direction of the rod portion on both ends of the rod portion. Both sides of the width direction of the rod portion are in contact with a pair of sides of the pair of secondary battery cells to face each other. The inner side of the each extension end is in contact with an other side of the secondary battery cell which is adjacent to a side of the secondary battery cell in contact with the rod portion.

US20030003350A1 provides a tray assembly for use in forming a sealed lead-acid battery system which houses multiple battery cells in horizontal positions for motive-power applications. In one aspect of the subject invention, the battery system includes a plurality of sealed lead-acid battery cells, and a housing having a plurality of walls which define an interior for accommodating the battery cells. At least one tray inserts bear against a base of the housing which partitions the interior into at least two compartments for accommodating the battery cells. In a second aspect of the subject invention, a sealed lead-acid battery system for motive-power applications may be provided which utilizes at least one spacer partially disposed between two battery cells to cause separation thereof.

JP2017050164A provides a battery module that can be enhanced in cooling efficiency of cells. A battery module includes plural cells, plural separators, and plural insulating portions. The plural cells are arranged side by side in a first direction, and each cell has a first surface facing the first direction and a second surface located at the opposite side to the first surface. Each of the plural separators is located between adjacent ones of the cells, forms a flow path between the adjacent ones of the cells, and is made of metal. Each of the plural insulating portions is interposed at least one of between the first surface and the separator and between the second surface and the separator in between the first surface of one of the adjacent cells and the second surface of the other cell of the adjacent cells, and has thermal conductivity and an insulating property.

The inventor finds at least the following problems in the device known to the inventors: the battery module deforms due to expansion during its operation; and the existing battery module is unreasonable in structure, causing deformation accumulation of the battery cells, so that the performance of the battery module is damaged.

### SUMMARY OF THE INVENTION

The present disclosure provides a battery module and a battery pack, for optimizing the structure of the battery module.

Some embodiments of the present disclosure provide a battery pack, including a case and a battery module, the battery module being mounted within the case, the battery module, including:
a plurality of battery cells, each of which comprising a first surface provided with an electrode terminal, a second surface opposite to the first surface, and side faces located between the first surface and the second surface; wherein the side faces comprise abutting faces and connecting faces connected with the abutting faces; and the plurality of battery cells are arranged in a length direction, and the abutting faces of all the battery cells face to each other; and
a first spacer, at least part of which being arranged between the abutting faces of two adjacent battery cells, and fixed to the abutting faces of the two adjacent battery cells, wherein the first spacer is configured to fix to a case;
the size of the first spacer is smaller than that of the abutting faces; thus, there is a gap between the abutting faces of the two adjacent battery cells;
wherein the first spacer comprises:
   a first spacing part, arranged between the abutting faces of the two adjacent battery cells and fixed to the abutting faces of the two adjacent battery cells; and
   a first connecting part, connected with the first spacing part, the first connecting part being located beyond the abutting faces of the two adjacent battery cells, and fixed to the connecting faces or the second surfaces of the two adjacent battery cells;
   wherein the length of the first connecting part is greater than that of each of the abutting faces, and a portion of the first connecting part located at an outer side of the abutting faces is provided with a connecting structure for fixation to the case;
   wherein the connecting structure comprises screw holes, a hole centre line of which is substantially parallel to a central line in a thickness direction of the first spacing part.

In some embodiments, there is a gap between the abutting faces of the two adjacent battery cells.

In some embodiments, a thermal insulation layer is mounted within the gap.

In some embodiments, one first spacing part is fixed between the abutting faces of every two adjacent battery cells.

In some embodiments, the first spacing part is connected with the abutting faces of the two adjacent battery cells through binder.

In some embodiments, the first connecting part is connected with the connecting faces or the second surfaces of the two adjacent battery cells through binder.

In some embodiments, the first connecting part is detachably connected or integrated with the first spacing part.

In some embodiments, the battery module further comprises a second spacer, at least part of which is arranged between the abutting faces of the two adjacent battery cells, and fixed to the abutting faces of the two adjacent battery cells.

In some embodiments, the second spacer comprises:
a second spacing part, arranged between abutting faces of the two adjacent battery cells and fixed to the abutting faces of the two adjacent battery cells; and
a second connecting part, fixedly connected or integrated with the second spacing part and located beyond the abutting faces of the two adjacent battery cells.

In some embodiments, one second connecting part is connected with a plurality of the second spacing parts, and one second spacing part is provided between the abutting faces of every two adjacent battery cells.

In some embodiments, the battery module further comprises:
an end plate, wherein the end plate is located at least one side of the plurality of battery cells; and the end plate is fixedly connected with the second connecting part, or the end plate is configured to be fixedly connected with the case; wherein the case is configured to mount the battery module.

In some embodiments, the second connecting part and the end plate are fixed to the case through a screw.

In some embodiments, a first fixing part is mounted at the bottom of the case, and a connecting structure on a first connecting part of the battery module is detachably connected with the first fixing part.

In some embodiments, a second fixing part is mounted at the bottom of the case, and an end plate of the battery module and/or a second connecting part are detachably connected with the second fixing part though a screw .

In the battery module provided by the technical solution described above, the first spacer is arranged in a direction of accumulation caused by expansion of the battery module; that is, the first spacer is arranged between abutting faces of the battery cells arranged in a row, the size of the first spacer being smaller than that of the abutting faces; thus, due to the presence of the first spacer, there is the gap between the abutting faces of the two adjacent battery cells , and the gap provides a buffering space for expansion of the battery cells, so that the expansion of the battery cells is limited within the space, and expansion accumulation of the adjacent battery cells due to contact is reduced or even avoided. Moreover, due to proving the first spacer, the battery cells do not contact each other, so that heat transfer between the battery cells is effectively reduced, and the heat dissipation effect is better.

### BRIEF DESCRIPTION OF THE DRAWINGS

The drawings described here are used for providing further understanding of the present disclosure, and are part of the present application, and the schematic embodiments of the present disclosure and description thereof are intended for explaining the present disclosure, rather than improperly limiting the present disclosure. In the drawings:
Figure 1 shows an exploded diagram of a battery module provided in some embodiments of the present disclosure;
Figure 2 shows an exploded diagram of a cell of a battery module provided in some embodiments of the present disclosure;
Figure 3 shows an enlarged diagram after installation at A of the battery module illustrated in Figure 1;
Figure 4 shows a three-dimensional diagram of a battery module provided in some embodiments of the present disclosure;
Figure 5 shows a structural diagram of a first spacer of a battery module provided in some embodiments of the present disclosure;
Figure 6 shows a structural diagram of a second spacer of a battery module provided in some embodiments of the present disclosure;
Figure 7 shows an exploded diagram of a battery pack provided in some embodiments of the present disclosure;
Figure 8 shows an exploded diagram of a battery pack provided in some other embodiments of the present disclosure;
Figure 9 shows an exploded diagram of a battery pack provided in still other embodiments of the present disclosure; and
Figure 10 shows an exploded diagram of a battery pack provided in yet other embodiments of the present disclosure.

### DESCRIPTION OF THE INVENTION

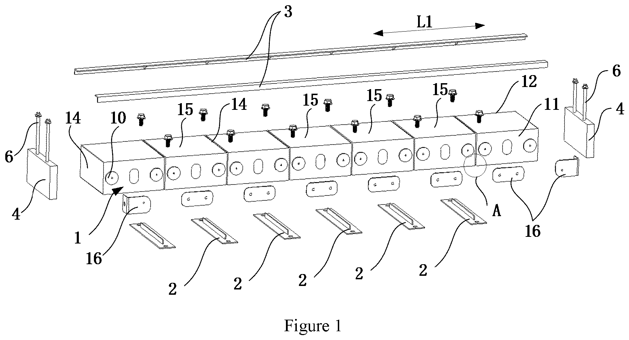

Technical solutions provided by the present disclosure are described in more detail below in conjunction with Figs. 1~10.

Some embodiments of the present disclosure provide a battery pack, comprising a case 5 and a battery module provided in any technical solution of the present disclosure, the battery module being mounted within the case 5.

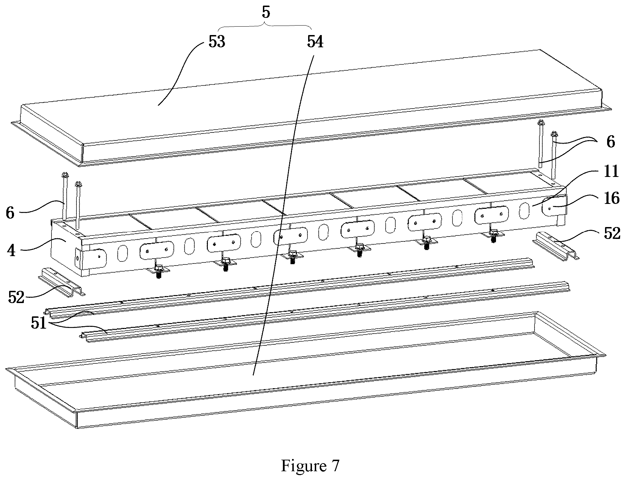

Using a battery cell 1 with a cuboid structure as an example, each battery cell 1 comprises four side faces 13. There are four manners of arrangement of the battery cells 1 in a row, respectively as shown in Figs. 7 to 10.

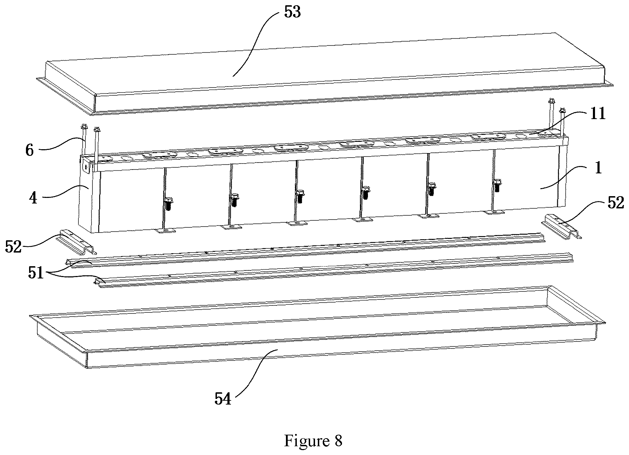

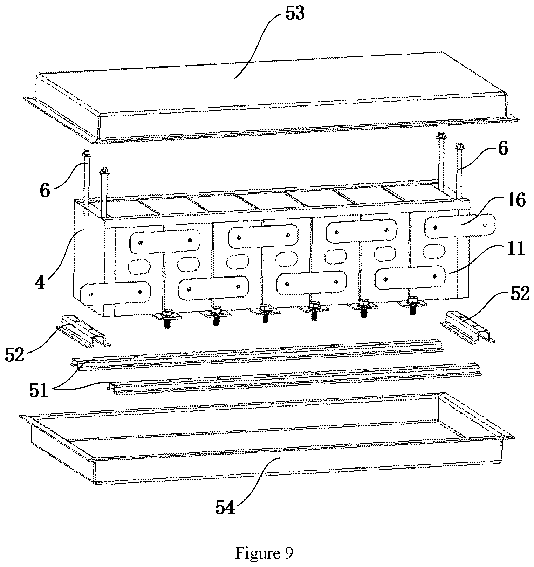

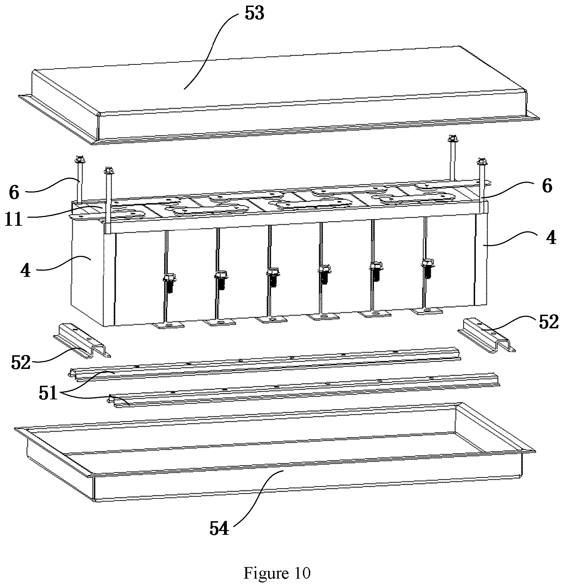

Figure 7 schematically shows smaller side faces 13 serve as abutting faces 14, and a first surface 11 is arranged forward. Figure 8 schematically shows smaller side faces 13 serve as abutting faces 14, and a first surface 11 is arranged upward. Figure 9 schematically shows larger side faces 13 serve as the abutting faces 14, and the first surface 11 is arranged forward. Figure 10 schematically shows the larger side faces 13 serve as the abutting faces 14, and the first surface 11 is arranged upward.

Relevant introduction of the battery module is provided below.

Referring to Figure 1, some embodiments of the present disclosure provide a battery module, comprising battery cells 1 and a first spacer 2. The battery cell 1 comprises a first surface 11 provided with an electrode terminal 10, a second surface 12 opposite to the first surface 11, and side faces 13 located between the first surface 11 and the second surface 12. The side faces 13 comprise abutting faces 14 and connecting faces 15 connected with the abutting faces 14. A plurality of battery cells 1 are arranged in a length direction, and the abutting faces 14 of all the battery cells 1 face to each other. The length direction means a length direction L1 of the case 5, as shown in Figure 1.

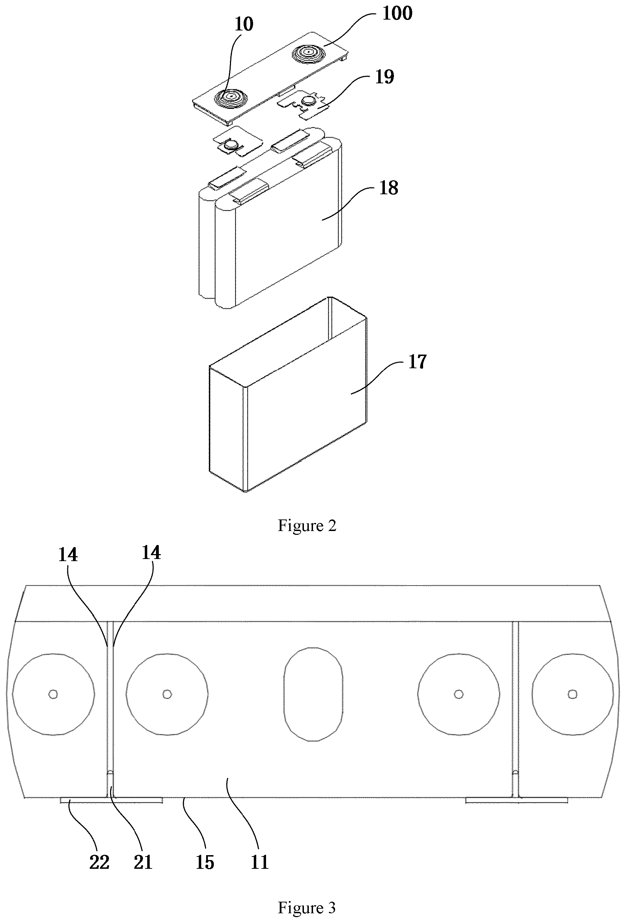

Referring to Figure 2, the structure of the battery cell 1 is introduced below.

The battery cell 1 comprises a housing 17, an electrode assembly 18 arranged within the housing 17, connectors 19 arranged at an end of the electrode assembly 18, and a cover plate 100 that covers the connectors 19 and the end of the electrode assembly 18. The cover plate 100 is provided with the electrode terminals 10.

The housing 17 has a closed end and an open end. The cover plate 100 is arranged at the opening of the housing 17. The electrode assembly 18 is mounted within the housing 17 via the opening.

An outer surface of the cover plate 100 serves as the first surface 11 of the cell described below, and a surface of the housing 17 opposite to the open end serves as the second surface 12 of the cell described below. The four side faces of the housing 17 serve as the four side faces of the battery cell 1.

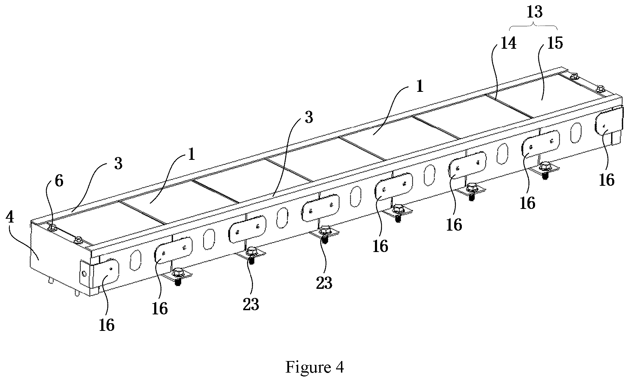

See Figure 1, which schematically shows the three-dimensional structure of the battery cell 1. Using the battery cell 1 with a cuboid structure as an example, the battery cell 1 comprises the first surface 11, the second surface 12 and the four side faces 13. The first surface 11 is provided with a positive and a negative electrode terminal. Among the four side faces 13 of battery cell 1, the side face 13 fit to another battery cell 1 is an abutting face 14, and the side face parallel to the abutting face is also an abutting face 14. Other side faces 13 than the abutting faces 14 are connecting faces 15. Referring to Figure 1 or Figure 4, the battery cell 1 has two abutting faces 14 and two connecting faces 15.

Referring to Figure 1, the battery cells 1 arranged in a row are electrically connected. Specifically, the electrode terminals 10 of the battery cells 1 are electrically connected through connecting sheets 16.

Referring to Figure 3, in some embodiments, there is a gap between abutting faces 14 of the two adjacent battery cells 1, so that heat dissipation of the battery cells 1 is better.

Referring to Figure 3, the size of a first spacing part 21 is smaller than that of the abutting face 14, to provide the gap between the abutting faces 14 of the two adjacent battery cells 1.

The size of the first spacer 2 is smaller than that of the abutting face 14, so that due to the presence of the first spacer 2 between the abutting faces 14 of the two adjacent battery cells 1, there is the gap between the abutting faces 14 of the two adjacent battery cells 1, the width of the gas being 1mm-10mm for example. The presence of the gap limits the expansion of the two abutting faces 14 within the gap. For the battery cells arranged in a row, the battery cells 1 do not directly abut against the adjacent battery cells 1 after expansion, so that the battery cells arranged in a row as a whole do not deform excessively due to expansion.

In some other embodiments, a thermal insulation layer (not shown in the figures) is mounted within the gap, to reduce temperature influence of the two adjacent battery cells 1.

Referring to Figs. 1, 3 and 4, in some embodiments, between every abutting faces 14 of the two adjacent battery cells 1 is arranged at least part of the first spacer 2; that is, the first spacing part 21 is arranged therebetween. The first spacing part 21 enables the battery cells 1 to be connected stably and firmly into a whole.

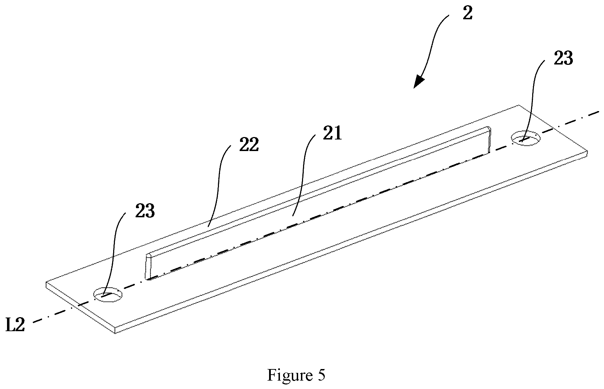

Referring to Figs. 3 and 5, in some embodiments, the first spacer 2 comprises the first spacing part 21 and a first connecting part 22. One first spacing part 21 is arranged between abutting faces 14 of every two adjacent battery cells 1, and connected to the two abutting faces 14. The first connecting part 22 and the first spacing part 21 are interconnected, specifically fixedly interconnected or integrated for example. The first connecting part 22 is located beyond the abutting faces 14 of the two adjacent battery cells 1, and is fixedly connected with the connecting faces 15 or the second surfaces 12 of the two adjacent battery cells 1.

The first connecting part 22 and the first spacing part 21 are connected through binder for example. The first connecting part 22 and the connecting faces 15 or the second surfaces 12 of the two adjacent battery cells 1 are connected through binder for example.

Depending on the placing direction of the battery cells 1, the first connecting part 22 is connected with the connecting faces 15 or the second surface 12. Figs. 4, 7 and 9 schematically show connections between the first connecting part 22 and the connecting faces 15. Figs. 8 and 10 schematically show connections between the first connecting part 22 and the second surfaces 12 of the two adjacent battery cells 1.

Specifically, as the battery cells 1 have a cuboid structure, the first connecting part 22 being fit to the connecting faces 15 is conducive to the structural stability of the entire battery module, and therefore optionally, both the first connecting part 22 and the first spacing part 21 are flat plates, and the first connecting part 22 is perpendicular to the first spacing part 21.

The first connecting part 22 and the connecting faces 15 of the two adjacent battery cells 1 are fixedly connected through an adhesive for example.

The first connecting part 22 is fixed to the connecting faces 15 of the two adjacent battery cells 1, so that the entire battery module has more fixing points, and the fixing points are distributed more uniformly. When the battery module is used to in the battery pack later, the batter pack bears forces more excellently, and is better in structural strength and structural reliability.

Referring to Figure 4, in some embodiments, the length of the first connecting part 22 is greater than that of the abutting faces 14, and the portion of the first connecting part 22 located at the outer side of the abutting faces 14 is provided with a connecting structure for connection with the case 5. The case 5 is used for mounting the battery module.

Referring to Figs. 5 and 7, the connecting structure 23 is screw holes for example, in which bolts are mounted to install the battery module to the case 5.

Referring to Figs. 1 and 5, the connecting structure 23 comprises screw holes, circle centers of which are located on a connecting line L2 of the central line in a thickness direction of the first spacing part 21, so that the areas of the portions of the first connecting part 22 located on two sides of the first spacing part 21 are substantially equal, and the connecting area of the first connecting part 22 and one of the two adjacent battery cells 1 is substantially equal to that of the first connecting part 22 and the other of the two adjacent battery cells 1 , which makes the entire battery module good in structural stability.

Referring to Figs. 1, 4 and 6, in some embodiments, the battery module further comprises a second spacer 3, wherein at least part of the second spacer 3 is arranged between the abutting faces 14 of two adjacent battery cells 1, and connected to the two abutting faces 14, with a gap formed between the second spacer 3 and the first spacer 2.

The gap between the second spacer 3 and the first spacer 2 is an expansion space for expansion of the battery cells 1. Providing the second spacer 3 makes the gaps between every two connected battery cells 1 more uniform, and reduces the phenomenon that some part of the gaps are greater and other part of the gaps are smaller.

Referring to Figs. 1, 4 and 6, in some embodiments, the second spacer 3 comprises a second spacing part 31 and a second connecting part 32. One second spacing part 31 is arranged between the abutting faces 14 of every two adjacent battery cells 1, and connected to the two abutting faces 14. The second connecting part 32 and the second spacing part 31 are interconnected fixedly or integrated. The second connecting part 32 is located beyond the abutting faces 14 of the two adjacent battery cells 1.

In some embodiments, there is a gap between the second spacing part 31 and the first spacer 2, and gap is conducive to heat dissipation of the battery cells 1.

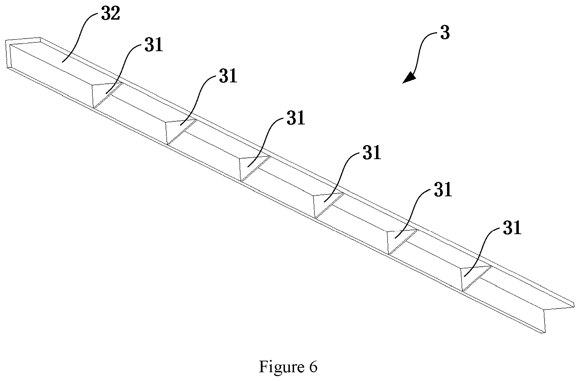

Referring to Figure 6, to fit the second connecting part 32 to the connecting faces 15 of the battery cells 1, the second connecting part 32 is perpendicular to the second spacing part 31.

Referring to Figure 6, in some embodiments, the second connecting part 32 is in a right-angle type, specifically an L-shaped plate for example, and the second spacing part 31 is connected with the second connecting part 32, and the second connecting part 32 is arranged at a corner of the battery cells 1.

Referring to Figs. 1 and 4, a second spacer 3 is provided at each of two adjacent edges of a row of battery pack. Each second spacer 3 is provided with a plurality of the second connecting parts 32. Two second spacing parts 31 are provided between the abutting faces 14 of every two adjacent battery cells 1.

The first spacer 2 is located at one end of the gap of the two adjacent battery cells 1, and the two second spacers 3 are located at the other end of the gap of the two adjacent battery cells 1. The thickness of the first spacer 2 is equal to that of the two second spacers 3. By means of the first spacer 2 and the two second spacers 3, the sizes of the gap at the two ends are substantially same. Such configuration makes the battery module more stable in structure and tidy.

To provide more fixing points for the battery module and make the battery module more stable in structure, in some embodiments, the second connecting part 32 is fixedly connected to the connecting faces 15 of both the two adjacent battery cells 1.

Specifically, the second connecting part 32 and the connecting faces 15 of the two adjacent battery cells 1 are connected through binder.

Referring to Figs. 4 and 6, in some embodiments, one second connecting part 32 is provided with a plurality of second spacing parts 31, and the second spacing parts 31 are provided between the abutting faces 14 of every two adjacent battery cells 1 of the battery cells 1 arranged in a row.

Referring to Figs. 4, and 7~10, in some embodiments, the battery module further comprises an end plate 4. The end plate 4 is located at least one side of the plurality of battery cells 1. At least one of two ends of the battery cells 1 arranged in a row is provided with at least one end plate 4. The end plate 4 is fixedly connected with the second connecting part 32; or the end plate 4 is configured to fixedly connect with the case 5, wherein the case 5 is used for mounting the battery module.

The end plate 4 and the second connecting part 32 are fixedly connected to form a relatively stable and firm frame, and the battery cells 1 arranged in a row are located within the frame. The structure makes the structure of the battery module more stable and firmer.

In some embodiments, screws 6 connect both the second connecting part 32 and the end plate 4 to the case 5.

This structure ensures that the battery module is mounted inside the case 5 more stably, firmly and reliably.

The mounting relation of the battery module inside the case 5 is introduced below.

Referring to Figs. 7 to 10, the case 5 comprises a first case 53 and a second case 54. The first case 53 and the second case 54 form an accommodating cavity, and the battery module is mounted inside the accommodating cavity.

A first fixing part 51 and a second fixing part 52 described below are mounted on the inner wall of the second case 54. Both the first fixing part 51 and the second fixing part 52 are fixed to the battery module, to achieve multi-point fixation of the battery module inside the accommodating cavity, so that the battery module has more fixing points which are more dispersed, and the battery module bears forces more uniformly.

Specifically, in some embodiments, the first fixing part 51 is mounted at the bottom of the case 5, and the connecting structure 23 on the first connecting part 22 of the battery module is detachably connected with the first fixing part 51.

The first fixing part 51 is a metal rod provided with screw holes for example, and is welded to the inner wall surface of the second case 54.

The connecting structure 23 is screw holes for example. Bolts pass through the screw holes to achieve detachable connection between the first connecting part 22 and the first fixing part 51.

In some embodiments, the second fixing part 52 is mounted at the bottom of the case 5, and the end plate 4 of the battery module and the second connecting part 32 are detachably connected with the second fixing part 52 through screws.

The second fixing part 52 is a metal rod provided with screw holes for example, and is welded to the inner wall surface of the second case 54.

Referring to Figs. 7 to 10, in some embodiments, there are two first fixing parts 51 and two second fixing parts 52, and the first fixing parts 51 and the second fixing parts 52 form a rectangle matched with the battery cells in a row. It is understood that other numbers of first fixing part 51 and second fixing part 52 with other structures are also adopted to form the required connecting frame.

In some embodiments, one or more battery modules are mounted within the case 5.

In description of the present disclosure, it needs to be understood that orientation or position relations denoted by the terms "centre" "longitudinal", "transverse", "front", "rear", "left", "right", "vertical", "horizontal", "top", "bottom", "inner", "outer" and the like are orientation or position relations based on illustration in the drawings, and are only intended to facilitate describing the present disclosure and simplifying description, instead of indicating or implying the denoted devices or elements necessarily have specific orientations or are constructed and operated in specific orientations, and thus they should not be understood as limiting the protection scope of the present disclosure.

Finally, it should be noted that the above embodiments are only used for illustrating rather than limiting the technical solutions of the present disclosure. Although the present disclosure is described in detail with reference to the foregoing embodiments, those of ordinary skill in the art should understand that they still can make modifications to the technical solutions disclosed in the foregoing embodiments as long as these modification fall within the scope of the current claims.

## Claims

1. A battery pack, comprising a case (5) and a battery module, the battery module being mounted within the case (5)
Wherein the battery module comprising:
a plurality of battery cells (1), each of which comprising a first surface (11) provided with an electrode terminal (10), a second surface (12) opposite to the first surface (11), and side faces (13) located between the first surface (11) and the second surface (12); wherein the side faces (13) comprise abutting faces (14) and connecting faces (15) connected with the abutting faces (14); and the plurality of battery cells (1) are arranged in a length direction, and the abutting faces (14) of all the battery cells (1) face to each other; and
a first spacer (2), at least part of which being arranged between the abutting faces (14) of two adjacent battery cells (1), and fixed to the abutting faces (14) of the two adjacent battery cells (1), wherein the first spacer (2) is configured to fix to the case (5);
the size of the first spacer (2) is smaller than that of the abutting faces such there is a gap between the abutting faces (14) of the two adjacent battery cells (1);
wherein the first spacer (2) comprises:
a first spacing part (21), arranged between the abutting faces (14) of the two adjacent battery cells (1) and fixed to the abutting faces (14) of the two adjacent battery cells (1); and
a first connecting part (22), connected with the first spacing part (21), the first connecting part (22) being located beyond the abutting faces (14) of the two adjacent battery cells (1), and fixed to the connecting faces (15) or the second surfaces (12) of the two adjacent battery cells (1);
wherein the length of the first connecting part (22) is greater than that of each of the abutting faces (14), and a portion of the first connecting part (22) located at an outer side of the abutting faces (14) is provided with a connecting structure (23) for fixation to the case (5);
wherein the connecting structure (23) comprises screw holes, a hole centre line of which is substantially parallel to a central line in a thickness direction of the first spacing part (21).

2. The battery pack of claim 1, wherein there is a gap between the abutting faces (14) of the two adjacent battery cells (1).

3. The battery pack of claim 2, wherein a thermal insulation layer is mounted within the gap.

4. The battery pack of claim 1, wherein one first spacing part (21) is fixed between the abutting faces (14) of every two adjacent battery cells (1).

5. The battery pack of claim 1, wherein the first spacing part (21) is connected with the abutting faces (14) of the two adjacent battery cells (1) through binder.

6. The battery pack of claim 1, wherein the first connecting part (22) is connected with the connecting faces (15) or the second surfaces (12) of the two adjacent battery cells (1) through binder.

7. The battery pack of claim 1, wherein the first connecting part (22) is detachably connected or integrated with the first spacing part (21).

8. The battery pack of any one of claims 1 to 7, further comprising a second spacer (3), at least part of which is arranged between the abutting faces (14) of the two adjacent battery cells (1), and fixed to the abutting faces (14) of the two adjacent battery cells (1).

9. The battery pack of claim 8, wherein the second spacer (3) comprises:
a second spacing part (31), arranged between abutting faces (14) of the two adjacent battery cells (1) and fixed to the abutting faces (14) of the two adjacent battery cells (1); and
a second connecting part (32), fixedly connected or integrated with the second spacing part (31) and located beyond the abutting faces (14) of the two adjacent battery cells (1).

10. The battery pack of claim 9, wherein one second connecting part (32) is connected with a plurality of the second spacing parts (31), and one second spacing part (31) is provided between the abutting faces (14) of every two adjacent battery cells (1).

11. The battery pack of claim 9, further comprising:
an end plate (4), wherein the end plate (4) is located at least one side of the plurality of battery cells (1); and the end plate (4) is fixedly connected with the second connecting part (32), or the end plate (4) is configured to be fixedly connected with the case (5); wherein the case is configured to mount the battery module.

## Patentansprüche

1. Batteriesatz, umfassend ein Gehäuse (5) und ein Batteriemodul, wobei das Batteriemodul innerhalb des Gehäuses (5) montiert ist,
wobei das Batteriemodul Folgendes umfasst:
eine Vielzahl von Batteriezellen (1), von der jede eine erste Fläche (11), die mit einem Elektrodenanschluss (10) versehen ist, eine zweite Fläche (12) gegenüber der ersten Fläche (11) und Seitenflächen (13) umfasst, die sich zwischen der ersten Fläche (11) und der zweiten Fläche (12) befinden; wobei die Seitenflächen (13) Stirnflächen (14) und mit den Stirnflächen (14) verbundene Verbindungsflächen (15) umfassen; und wobei die Vielzahl von Batteriezellen (1) in einer Längsrichtung angeordnet ist und die Stirnflächen (14) aller Batteriezellen (1) einander zugewandt sind; und
einen ersten Abstandshalter (2), von dem mindestens ein Teil zwischen den Stirnflächen (14) von zwei benachbarten Batteriezellen (1) angeordnet ist, und der an den Stirnflächen (14) der zwei benachbarten Batteriezellen (1) befestigt ist, wobei der erste Abstandshalter (2) dazu konfiguriert ist, an dem Gehäuse (5) befestigt zu sein;
wobei die Größe des ersten Abstandhalters (2) kleiner als die der Stirnflächen ist, sodass zwischen den Stirnflächen (14) der zwei benachbarten Batteriezellen (1) ein Spalt vorhanden ist;
wobei der erste Abstandshalter (2) Folgendes umfasst:
ein erstes Abstandsteil (21), das zwischen den Stirnflächen (14) der zwei benachbarten Batteriezellen (1) angeordnet und an den Stirnflächen (14) der zwei benachbarten Batteriezellen (1) befestigt ist; und
ein erstes Verbindungsteil (22), das mit dem ersten Abstandsteil (21) verbunden ist, wobei sich das erste Verbindungsteil (22) jenseits der Stirnflächen (14) der zwei benachbarten Batteriezellen (1) befindet und an den Verbindungsflächen (15) oder den zweiten Flächen (12) der zwei benachbarten Batteriezellen (1) befestigt ist;
wobei die Länge des ersten Verbindungsteils (22) größer ist als die jeder der Stirnflächen (14) und ein Abschnitt des ersten Verbindungsteils (22), der sich an einer Außenseite der Stirnflächen (14) befindet, mit einer Verbindungsstruktur (23) zur Befestigung an dem Gehäuse (5) versehen ist;
wobei die Verbindungsstruktur (23) Schraubenlöcher umfasst, deren Lochmittellinie im Wesentlichen parallel zu einer Mittellinie in einer Dickenrichtung des ersten Abstandsteils (21) ist.

2. Batteriesatz nach Anspruch 1, wobei zwischen den Stirnflächen (14) der zwei benachbarten Batteriezellen (1) ein Spalt vorhanden ist.

3. Batteriesatz nach Anspruch 2, wobei innerhalb des Spalts eine Wärmedämmschicht montiert ist.

4. Batteriesatz nach Anspruch 1, wobei ein erstes Abstandsteil (21) zwischen den Stirnflächen (14) von jeweils zwei benachbarten Batteriezellen (1) befestigt ist.

5. Batteriesatz nach Anspruch 1, wobei das erste Abstandsteil (21) mit den Stirnflächen (14) der zwei benachbarten Batteriezellen (1) durch Bindemittel verbunden ist.

6. Batteriesatz nach Anspruch 1, wobei das erste Verbindungsteil (22) mit den Verbindungsflächen (15) oder den zweiten Flächen (12) der zwei benachbarten Batteriezellen (1) durch Bindemittel verbunden ist.

7. Batteriesatz nach Anspruch 1, wobei das erste Verbindungsteil (22) lösbar mit dem ersten Abstandsteil (21) verbunden oder in dieses integriert ist.

8. Batteriesatz nach einem der Ansprüche 1 bis 7, ferner umfassend einen zweiten Abstandshalter (3), von dem mindestens ein Teil zwischen den Stirnflächen (14) der zwei benachbarten Batteriezellen (1) angeordnet ist, und der an den Stirnflächen (14) der zwei benachbarten Batteriezellen (1) befestigt ist.

9. Batteriesatz nach Anspruch 8, wobei der zweite Abstandshalter (3) Folgendes umfasst:
ein zweites Abstandsteil (31), das zwischen Stirnflächen (14) der zwei benachbarten Batteriezellen (1) angeordnet und an den Stirnflächen (14) der zwei benachbarten Batteriezellen (1) befestigt ist; und
ein zweites Verbindungsteil (32), das fest mit dem zweiten Abstandsteil (31) verbunden oder in dieses integriert ist und sich jenseits der Stirnflächen (14) der zwei benachbarten Batteriezellen (1) befindet.

10. Batteriesatz nach Anspruch 9, wobei ein zweites Verbindungsteil (32) mit einer Vielzahl der zweiten Abstandsteile (31) verbunden ist und ein zweites Abstandsteil (31) zwischen den Stirnflächen (14) von jeweils zwei benachbarten Batteriezellen (1) bereitgestellt ist.

11. Batteriesatz nach Anspruch 9, ferner umfassend:
eine Endplatte (4), wobei sich die Endplatte (4) an mindestens einer Seite der Vielzahl von Batteriezellen (1) befindet; und wobei die Endplatte (4) fest mit dem zweiten Verbindungsteil (32) verbunden ist; oder die Endplatte (4) dazu konfiguriert ist, fest mit dem Gehäuse (5) verbunden zu sein; wobei das Gehäuse dazu konfiguriert ist, das Batteriemodul zu montieren.

## Revendications

1. Bloc batterie, comprenant un boîtier (5) et un module de batterie, le module de batterie étant monté à l'intérieur du boîtier (5)
dans lequel le module de batterie comprend :
une pluralité de cellules de batterie (1), chacune comprenant une première surface (11) pourvue d'une borne d'électrode (10), une seconde surface (12) opposée à la première surface (11) et des faces latérales (13) situées entre la première surface (11) et la seconde surface (12) ; dans lequel les faces latérales (13) comprennent des faces de butée (14) et des faces de connexion (15) connectées aux faces de butée (14) ; et la pluralité de cellules de batterie (1) sont agencées dans une direction de la longueur, et les faces de butée (14) de toutes les cellules de batterie (1) se font face ; et
une première entretoise (2), dont au moins une partie est agencée entre les faces de butée (14) de deux cellules de batterie adjacentes (1), et fixée aux faces de butée (14) des deux cellules de batterie adjacentes (1), dans lequel la première entretoise (2) est configurée pour se fixer au boîtier (5) ;
la taille de la première entretoise (2) est plus petite que celle des faces de butée de sorte qu'il existe un espace entre les faces de butée (14) des deux cellules de batterie adjacentes (1) ;
dans lequel la première entretoise (2) comprend :
une première partie d'espacement (21), agencée entre les faces de butée (14) des deux cellules de batterie adjacentes (1) et fixée aux faces de butée (14) des deux cellules de batterie adjacentes (1) ; et
une première partie de connexion (22), connectée à la première partie d'espacement (21), la première partie de connexion (22) étant située au-delà des faces de butée (14) des deux cellules de batterie adjacentes (1), et fixée aux faces de connexion (15) ou aux secondes surfaces (12) des deux cellules de batterie adjacentes (1) ;
dans lequel la longueur de la première partie de connexion (22) est supérieure à celle de chacune des faces de butée (14), et une partie de la première partie de connexion (22) située sur un côté extérieur des faces de butée (14) est pourvue d'une structure de connexion (23) pour la fixation au boîtier (5) ;
dans lequel la structure de connexion (23) comprend des trous de vis, dont une ligne centrale de trou est sensiblement parallèle à une ligne centrale dans une direction d'épaisseur de la première partie d'espacement (21).

2. Bloc batterie selon la revendication 1, dans lequel il existe un espace entre les faces de butée (14) des deux cellules de batterie adjacentes (1).

3. Bloc batterie selon la revendication 2, dans lequel une couche d'isolation thermique est montée à l'intérieur de l'espace.

4. Bloc batterie selon la revendication 1, dans lequel une première partie d'espacement (21) est fixée entre les faces de butée (14) de chaque paire de cellules de batterie adjacentes (1).

5. Bloc batterie selon la revendication 1, dans lequel la première partie d'espacement (21) est connectée aux faces de butée (14) des deux cellules de batterie adjacentes (1) par l'intermédiaire d'un liant.

6. Bloc batterie selon la revendication 1, dans lequel la première partie de connexion (22) est connectée aux faces de connexion (15) ou aux secondes surfaces (12) des deux cellules de batterie adjacentes (1) par l'intermédiaire d'un liant.

7. Bloc batterie selon la revendication 1, dans lequel la première partie de connexion (22) est connectée de manière amovible ou intégrée à la première partie d'espacement (21).

8. Bloc batterie selon l'une quelconque des revendications 1 à 7, comprenant également une seconde entretoise (3), dont au moins une partie est agencée entre les faces de butée (14) des deux cellules de batterie adjacentes (1), et fixée aux faces de butée (14) des deux cellules de batterie adjacentes (1).

9. Bloc batterie selon la revendication 8, dans lequel la seconde entretoise (3) comprend :
une seconde partie d'espacement (31), agencée entre les faces de butée (14) des deux cellules de batterie adjacentes (1) et fixée aux faces de butée (14) des deux cellules de batterie adjacentes (1) ; et
une seconde partie de liaison (32), reliée de manière fixe ou intégrée à la seconde partie d'espacement (31) et située au-delà des faces de butée (14) des deux cellules de batterie adjacentes (1).

10. Bloc batterie selon la revendication 9, dans lequel une seconde partie de connexion (32) est connectée à une pluralité de secondes parties d'espacement (31), et une seconde partie d'espacement (31) est prévue entre les faces de butée (14) de chaque paire de cellules de batterie adjacentes (1).

11. Bloc batterie selon la revendication 9, comprenant également :
une plaque d'extrémité (4), dans lequel la plaque d'extrémité (4) est située au moins sur un côté de la pluralité de cellules de batterie (1) ; et la plaque d'extrémité (4) est connectée de manière fixe à la seconde partie de connexion (32), ou la plaque d'extrémité (4) est configurée pour être connectée de manière fixe au boîtier (5) ; dans lequel le boîtier est configuré pour monter le module de batterie.
